# EUROPÄISCHE PATENTSCHRIFT

(11) **EP 0 362 723 B1**
(45) Veröffentlichungstag und Bekanntmachung des Hinweises auf die Patenterteilung: **14.12.1994**
(21) Anmeldenummer: 89118134.9
(22) Anmeldetag: 29.09.1989
(51) Int. Cl.: H04L 12/56

(54) **Koppelfeld für ein Vermittlungssystem**
Network for a switching system
Réseau pour système de commutation

(30) Priorität: 01.10.1988 DE 3833490
(43) Veröffentlichungstag der Anmeldung: 11.04.1990
(73) Patentinhaber: Philips Patentverwaltung GmbH, 22335 Hamburg (DE); Philips Electronics N.V., 5621 BA Eindhoven (NL)
(72) Erfinder: Killat, Ulrich, Dr., D-2000 Hamburg 56 (DE); Krüger, Johann, D-2085 Quickborn (DE)
(74) Vertreter: Peuckert, Hermann, Dipl.-Ing.

(56) Entgegenhaltungen:
- WO-A-86/02510

## Beschreibung

Die Erfindung betrifft ein Koppelfeld für ein Vermittlungssystem, das nach Art eines Raummultiplex-Koppelfeldes mit m/1-Stufen mit Zubringerleitungen und je einer Abnehmerleitung aufgebaut ist und bei dem Zellen nach einem Zeitvielfachverfahren übertragen werden und anhand der im Zellenkopf enthaltenen Weglenkungsinformation die Durchschaltung der Zellen erfolgt und bei dem bei Übereinstimmung von Weglenkungsinformation und Adresse der Abnehmerleitung die auf der Zubringerleitung eingetroffene Zelle in den dieser Abnehmerleitung zugeordneten Pufferspeicher eingelesen wird und eine Entscheiderschaltung vorgesehen ist. Das Koppelfeld ist besonders für die Anwendung bei asynchronen Zeitvielfachverfahren geeignet.

In Kommunikationsnetzen nimmt der Anteil des zu übertragenden Datenverkehrs ständig zu. Zur Bewältigung des Datenverkehrs wurden Vermittlungssysteme getrennt für den Daten- und den Fernsprechverkehr aufgebaut. Da die Datenrate der zu übertragenden Datensignale eine Vielzahl von unterschiedlichen Werten annehmen kann ist es schwierig, Daten- und Fernsprechvermittlung in einem Netzknoten zu vereinen.

In der europäischen Patentanmeldung mit der Veröffentlichungsnummer 0 183 592 wurde ein Breitband-Vermittlungssystem vorgeschlagen, bei dem die Nachricht in Zellen zerlegt und über breitbandige Übertragungswege nach einem asynchronen Zeitvielfachverfahren übertragen werden. Die Zellen können gleiche oder unterschiedliche Länge aufweisen. Sie bestehen aus Nutz- sowie aus Adressinformation, wobei die Adressinformation in einem Kopffeld oder Zellenkopf (Header) untergebracht ist. Die Anzahl der Bits einer Zelle wird als deren Länge bezeichnet, wobei in den Standardisierungsvorschlägen hierfür Werte zwischen 120 und 256 Bits für die Nutzinformation und 32 oder 16 Bits für den Zellenkopf vorgesehen sind. Die Zeitintervalle, in denen Zellen übertragen werden, werden als Rahmen (Frames) bezeichnet. Dabei kann ein Rahmen eine gültige Zelle enthalten oder leer sein. Zwischen zwei Teilnehmern des Breitband-Vermittlungssystems besteht eine "virtuelle Verbindung" (virtual connection), welche dadurch aufrechterhalten wird, daß die von den Teilnehmereinrichtungen abgesandten Zellen mit eindeutigen Kopf-Kennungen versehen werden, die den Vermittlungsknoten das korrekte Weiterleiten der Zellen gestatten. Die im Vermittlungsknoten ankommenden Zellen von einer eingehenden Leitung werden unter Umsetzung des Zellenkopfes auf eine ausgehende Leitung übertragen. Da während eines Rahmens zwei oder mehrere Zellen für die gleiche Ausgangsleitung eintreffen können, müssen im Vermittlungsknoten sogenannte Wartepuffer vorgesehen werden. Im Wartepuffer werden einer oder mehrere dieser Zellen solange zwischengespeichert, bis für diese ein freier Rahmen zur Verfügung steht.

Hinsichtlich der Wartepufferanordnung können die Vermittlungsknoten zentralgepufferte Systeme (wie beispielsweise aus der europäischen Patentanmeldung mit der Veröffentlichungsnummer 0 183 592 bekannt) oder dezentral gepufferte Systeme sein. Bei zentral gepufferten Systemen gibt es nur einen Puffer, in dem jede eingehende Leitung ihre ankommenden Zellen ablegt und aus dem jede abgehende Leitung die für sie bestimmten Zellen wieder ausliest. Systeme mit dezentraler Pufferung werden dahingehend unterschieden, ob eine Pufferung von Zellen ausschließlich auf der Eingangsseite erfolgt oder ob die Puffer ausschließlich vor den abgehenden Leitungen angeordnet sind oder ob es sich um Systeme mit Eingangs- und Ausgangspufferung handelt. Hier spricht man auch von Koppelfeldpufferung, wenn jedem Koppelpunkt einer Koppelmatrix ein Puffer zugeordnet ist.

In der DE-C-38 23 878 ist ein aus m/1-Stufen aufgebautes Koppelfeld vorgeschlagen worden. Nach Art eines Raummultiplex-Koppelfeldes sind zeilenweise Zubringerleitungen und spaltenweise Abnehmerleitungen angeordnet, wobei jeweils an eine m/1-Stufe m Zubringerleitungen und eine Ausgangsleitung angeschlossen sind. Zur Auswertung der im Zellenkopf enthaltenen Informationen ist jeder Zubringerleitung einer m/1-Stufe eine eigene Auswertelogik zugeordnet. Jede Zubringerleitung ist an einen Pufferspeicher angeschlossen, der die über die Zubringerleitung zugeführten Zellen aufnimmt und speichert, sofern ein dem Pufferspeicher zugeordneter Vergleicher festgestellt hat, daß die in einem Adressenspeicher gespeicherte Adresse der Abnehmerleitung mit der im Zellenkopf enthaltenen Weglenkungsinformation übereinstimmt. Treffen gleichzeitig an mehreren Zubringerleitungen einer m/1-Stufe Zellen ein, die für die Abnehmerleitung dieser Stufe bestimmt sind, so können diese Zellen zwar ebenfalls gleichzeitig in die Pufferspeicher weitergeleitet werden. Aus diesen können sie aber nur nacheinander auf die Abnehmerleitung ausgelesen werden. Hierzu ist jeder m/1-Stufe eine Entscheiderschaltung zugeordnet, welche die Reihenfolge der durchzuschaltenden Zubringerleitungen festlegt. Die Reihenfolge wird durch die räumliche Anordnung der Zubringerleitungen bestimmt. Treffen an einer Zubringerleitung einer m/1-Stufe mehrere Zellen ein, die für die Abnehmerleitung dieser Stufe bestimmt und in Form einer Warteschlange im Pufferspeicher gespeichert sind, so wird dies ebenfalls berücksichtigt.

Der Erfindung liegt die Aufgabe zugrunde, ein Koppelfeld der eingangs genannten Art derart zu verbessern, daß die in den Pufferspeichern der m/1-Stufen gebildeten Warteschlangen möglichst fair abgearbeitet werden. Dies bedeutet, daß für die gleiche Abnehmerleitung bestimmte Zellen, die nacheinander in einer m/1-Stufe eintreffen, diese in der gleichen Reihenfolge verlassen, in der sie eintrafen.

Diese Aufgabe wird erfindungsgemäß durch ein Koppelfeld mit den Merkmalen des Patentanspruches 1 gelöst.

Weitere Ausgestaltungen der Erfindung sind in den Unteransprüchen angegeben.

Im folgenden sollen die Erfindung und ihre Ausgestaltungen anhand des in den Figuren 1 bis 3 schematisch dargestellten Ausführungsbeispiels erläutert werden.

Es zeigen:
- Fig. 1: ein Koppelfeld aus n m/1-Stufen mit ausgangsseitigen Pufferspeichern.
- Fig. 2: eine Ausführungsform einer m/1-Stufe.
- Fig. 3: eine Ausführungsform einer Entscheiderschaltung.

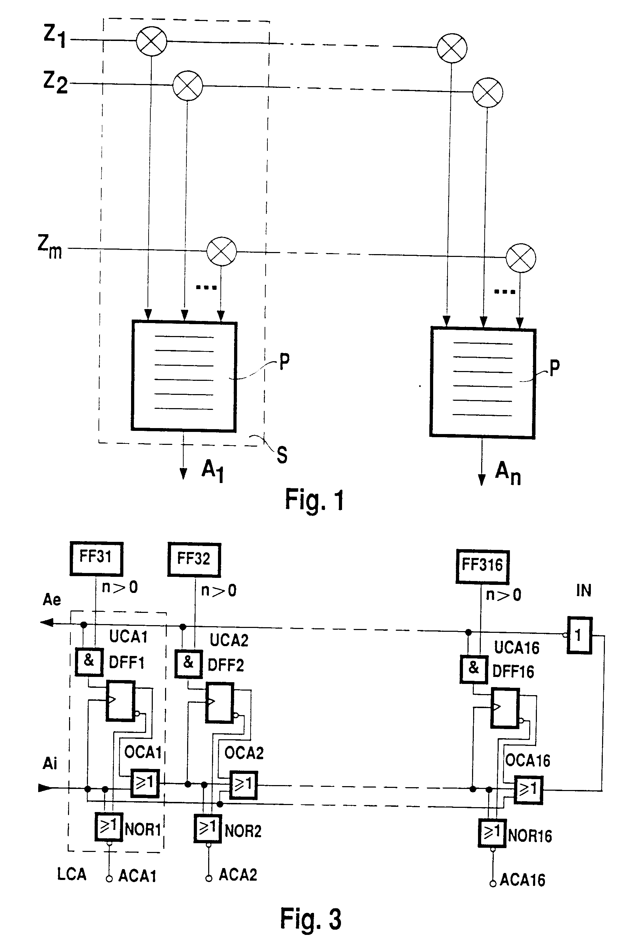

Fig. 1 zeigt ein Koppelfeld aus n m/1-Stufen 5 mit ausgangsseitigen Pufferspeichern P. Die auf den Zubringerleitungen Z1...Zm ankommenden Zellen sollen je nach der in ihrem Kopffeld vorhandenen Weglenkungsinformation auf eine der Abnehmerleitungen A1...An weitergeschaltet werden. Die m/1-Stufen S sind so ausgebildet, daß gleichzeitig oder nahezu gleichzeitig auf den Zubringerleitungen Z1...Zn eintreffende Zellen, welche nach ihrer Weglenkungsinformation z.B. für die Abnehmerleitung A1 bestimmt sind, zunächst unmittelbar nach ihrem Eintreffen im Pufferspeicher P abgespeichert werden. Aus diesem Pufferspeicher müssen sie dann nacheinander auf die Abnehmerleitung A1 ausgelesen werden.

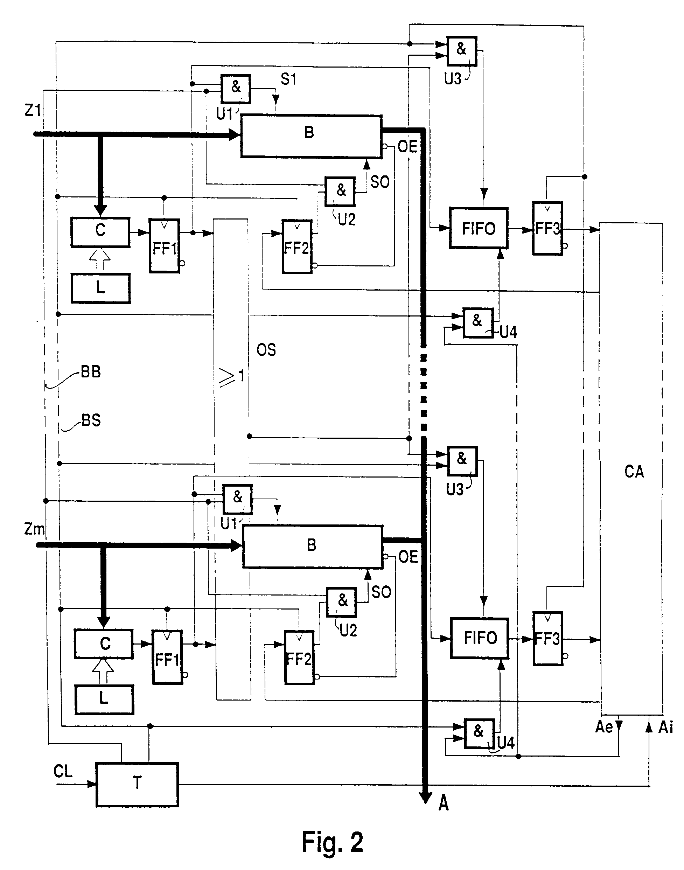

Fig. 2 zeigt zeigt eine Ausführungsform einer m/1-Stufe S. An die m/1-Stufe sind eingangsseitig m Zubringerleitungen Z1...Zm anschließbar. Die auf ihnen ankommenden Zellen können auf eine Abnehmerleitung A weitergeleitet werden. An jeder Zubringerleitung Z1...Zm ist ein Vergleicher C angeschlossen sowie ein Pufferspeicher B. Diese Pufferspeicher B bilden in ihrer Gesamtheit den in Fig. 1 schematisch dargestellten Pufferspeicher P. Die Ausgänge der Pufferspeicher B sind alle mit der Abnehmerleitung A dieser m/1-Stufe verbunden. Mittels der Taktschaltung T werden aus einem Eingangstakt Cl die für die zeitliche Steuerung der m/1-Stufe notwendigen Taktsignale erzeugt. Dies sind das Zellen-Startsignal BS, das Zellen-Burstsignal BB und das Serienschaltsignal Ai. Die Taktsignale Zellen-Startsignal BS und Zellen-Burstsignal BB steuern das Einlesen der Zellen in die Pufferspeicher B. An den Vergleichseingängen der Vergleicher C ist jeweils ein Adressenspeicher L angeschlossen, der die Adresse der zugehörigen Abnehmerleitung A enthält. Das die Adresse der Abnehmerleitung A kennzeichnende in den Adressenspeichern L enthaltene Bitmuster ist für alle Vergleicher dieser m/1-Stufe gleich.

Mit dem Pufferspeicher B ist eine Steuerlogikschaltung verbunden. Diese weist ein erstes Flip-Flop FF1 und ein erstes UND-Gatter U1 auf. Der Setzeingang des Flip-Flops FF1 ist mit dem Ausgang des Vergleichers C verbunden, dem Takteingang des Flip-Flops FF1 wird das Zellen-Startsignal BS zugeführt. Der nichtinvertierende Ausgang des Flip-Flops FF1 ist mit dem Eingang eines Speichers FIFO verbunden, der in einen Zwischenspeicher FF3 auslesbar ist. Dieser Zwischenspeicher ist beim Ausführungsbeispiel als Flip-Flop mit einem nichtinvertierenden Ausgang und mit einem Takteingang ausgebildet. Der Ausgang des Zwischenspeichers FF3 ist mit der Entscheiderschaltung CA verbunden. Ferner ist der Ausgang des Flip-Flops FF1 mit einem ersten Eingang des ersten UND-Gatters U1 verbunden, an dessen zweiten Eingang das Zellen-Burstsignal BB angelegt wird. Der Ausgang des ersten UND-Gatters U1 ist mit dem Einschreib-Steuereingang des Eingangspuffers B verbunden. Die Steuerlogikschaltung enthält ferner ein zweites Flip-Flop FF2 sowie ein zweites UND-Gatter U2. Dem ersten Eingang des UND-Gatters U2 ist ebenfalls das Zellen-Burstsignal BB zugeführt, während der Takteingang des Flip-Flops FF2 das Zellen-Startsignal BS zugeführt erhält. Der nichtinvertierende Ausgang des zweiten Flip-Flops FF2 ist mit dem zweiten Eingang des UND-Gatters U2 verbunden, dessen Ausgang an den Eingang des Pufferspeichers B angeschlossen ist, über den dasAuslesen des Pufferspeichers ausgelöst werden kann (Lese-Steuereingang). Der invertierende Ausgang des Flip-Flops FF2 ist mit einem Eingang des Pufferspeichers B verbunden, über den bei Anlegen des Signals OE das Auslesen des Pufferspeichers verhindert werden kann (Lese-Sperreingang).

Das Flip-Flop FF1 ist ausgangsseitig außerdem an einer Vielfach-ODER-Schaltung OS angeschlossen, an welcher eingangsseitig auch die Flip-Flops FF1 der den übrigen Zubringerleitungen Z1...Zm zugeordneten Logikschaltungen angeschlossen sind. Ausgangsseitig ist die Vielfach-ODER-Schaltung OS mit einem ersten Eingang einer dritten UND-Schaltung U3 verbunden, deren zweitem Eingang das Zellen-Startsignal BS zugeführt ist. Der Ausgang der UND-Schaltung U3 ist am Takteingang des Speichers FIFO angeschlossen, an dessen Auslesesteuereingang der Ausgang einer vierten UND-Schaltung U4 angeschlossen ist. Dieser UND-Schaltung U4 ist an einem ersten Eingang das Zellen-Startsignal BS zugeführt und an einem zweiten Eingang ein Serienschaltsignal Ae, welches in der Entscheiderschaltung CA aus dem dieser zugeführten in der Taktschaltung T erzeugten Serienschaltsignal Ai zeitlich verzögert und invertiert ist. Dem Takteingang des Zwischenspeichers FF3 ist ebenfalls das Zellen-Startsignal BS zugeführt.

Für die Funktion der Schaltungsanordnung sei angenommen, daß die Daten auf den Zubringerleitungen Z1...Zm alle auf den Zellenanfang synchronisiert sind. Jeder Vergleicher C vergleicht fortlaufend die auf der zugehörigen Zubringerleitung ankommenden Daten mit der im Speicher L gespeicherten Adresse für die Abnehmerleitung A. Synchronisiert mit dem Zellen-Startsignal BS beim Auftreten der Weglenkungsinformation wird das Ergebnis im ersten Flip-Flop FF1 gespeichert. Bei einer Übereinstimmung der Weglenkungsinformation mit der Adresse der Abnehmerleitung A öffnet durch den dann vorliegenden Kennzustand am nichtinvertierenden Ausgang des ersten Flip-Flops FF1 das erste UND-Gatter U1, an dem gleichzeitig das Zellen-Burstsignal BB anliegt. Hierdurch wird das Einschreibsignal SI erzeugt, welches bewirkt, daß die auf der Zubringerleitung ankommenden Daten in den Pufferspeicher B eingeschrieben werden. Gleichzeitig wird in den Speicher FIFO eine logische 1 eingetragen. Die Funktion der Vielfach-ODER-Schaltung OS besteht darin, daß für jede der Zubringerleitungen Z1...Zm, auf der keine Zelle eingetroffen ist, eine logische 0 in den Speicher FIFO eingetragen wird unter der Voraussetzung, daß auf irgendeiner Zubringerleitung eine Zelle eingetroffen ist und somit wenigstens in einen Speicher FIFO der m/1-Stufe eine logische 1 eingetragen worden ist. In diesem Fall war der Kennzustand des entsprechenden Flip-Flops 1 über die Vielfach-ODER-Schaltung an alle UND-Schaltungen U3 und als deren Ausgangssignal an den Takteingang aller Speicher FIFO gelangt und hatte bewirkt, daß der jeweils am Ausgang des entsprechenden ersten Flip-Flops FF1 anstehende Kennzustand in die Speicher FIFO eingschrieben wurde. Auf diese Weise wird im jeweiligen Speicher FIFO die Abfolge der Ereignisse auf den jeweiligen Zubringerleitungen abgespeichert. Ausgenommen sind nur solche Intervalle, in denen auf keiner Zubringerleitung eine Zelle eintraf, weil dann kein Signal an den Takteingang der Speicher FIFO gelangte.

Die Entscheiderschaltung CA teilt den Zubringerleitungen, für die im jeweiligen Zwischenspeicher FF3 eine 1 gespeichert ist, die Ausgangsleitung A zyklisch zu. Ist solch ein Zyklus beendet, so wird die nächste Stelle aus allen Speichern FIFO ausgelesen und das Ergebnis wird in den jeweiligen Zwischenspeichern FF3 gespeichert. Das Ende eines Zyklus der Entscheiderschaltung CA wird durch den Wechsel des von der Entscheiderschaltung CA abgegebenen Serienschaltsignals Ae von "LOW" nach "HIGH" an einem Ausgang der Entscheiderschaltung CA angezeigt. Dieses Serienschaltsignal Ae liegt an den jeweils zweiten Eingängen der UND-Schaltungen U4 an.

Eine positive Entscheidung an einem Ausgang der Entscheiderschaltung CA wird in dem entsprechenden Flip-Flop FF2 gespeichert. Durch den dann am Ausgang dieses Flip-Flops FF2 vorhandenen Kennzustand wird das zugehörige UND-Gatter U2 bei gleichzeitigem Anliegen des Zellen-Burstsignals BB geöffnet und das Ausgangssignal SO bewirkt das Auslesen des Inhalts des Pufferspeichers B auf die Abnehmerleitung A. Die Pufferspeicher der übrigen Logikschaltungen an den weiteren Zubringerleitungen werden über das Signal OE an den Ausgängen der jeweiligen Flip-Flops FF2 gesperrt. Die Größe des Speichers FIFO, der die Information "Zellenankunft/keine Zellenankunft" speichert, ist nach oben durch die Länge der Warteschlange begrenzt. Diese Größe ist jedoch nicht schaltungstechnisch begründbar, sondern wird allein durch die statistischen Eigenschaften der Ankunftsprozesse bestimmt. Die Dimensionierung ergibt sich daher aus der Kenntnis oder Schätzung des Verkehrsverhaltens der Quellen und der Anwendung bekannter Formeln der Warteschlangentheorie.

Die Entscheiderschaltung CA arbeitet also mit den Kennzuständen der Zwischenspeicher FF3. In Abhängigkeit vom jeweiligen Kennzustand erfolgt die Zuteilung der Abnehmerleitung A. Dabei wird ein Signal am Ausgang des Zwischenspeichers FF3, das anzeigt, daß sein Kennzustand Null ist, nicht besonders ausgewertet.

Eine Ausführungsform einer Entscheiderschaltung CA für eine 16/1-Stufe für sechzehn Zubringerleitungen ist in Fig. 3 dargestellt. Eine solche Entscheiderschaltung CA ist aus einzelnen gleich aufgebauten Logikschaltungen LCA zusammengesetzt, wobei je eine solche Logikschaltung an den Ausgang jeder der Zwischenspeicher FF3 der in Fig. 2 gezeigten Anordnung angeschlossen ist.

Die dem Zwischenspeicher FF31 zugeordnete Logikschaltung weist ein flankengetriggertes D-Flip-Flop DFF1 auf, an dessen D-Eingang der Ausgang eines UND-Gatters UCA1 angeschlossen ist, wobei am ersten Eingang dieses UND-Gatters UCA1 jeweils der Ausgang des als Zwischenspeichers FF31 angeschlossen ist. Der invertierende Ausgang dieses D-Flip-Flops DFF1 ist mit einem NOR-Gatter NOR1 und der nichtinvertierende Ausgang dieses D-Flip-Flops DFF1 ist mit einem ODER-GatterOCA1 verbunden. Die Ausgänge der NOR-Gatter bilden die Ausgänge ACA1, ACA2... der Entscheiderschaltung CA und sind mit entsprechenden Eingängen der Steuerlogikschaltungen der Pufferspeicher B der in Fig. 2 gezeigten Schaltungsanordnung verbunden. Da die Takteingänge der D-Flip-Flops DFF2...DFF16 über ein ODER-Gatter jeweils mit dem nichtinvertierenden Ausgang des jeweils vorangehenden D-Flip-Flops DFF1...DFF15 verbunden sind, können die einzelnen D-Flip-Flops als in Serie liegend betrachtet werden.

An einem ersten Takteingang der Entscheiderschaltung CA liegt ein in der Taktschaltung T erzeugtes Serienschaltsignal Ai an. Eine positive Flanke von Ai wird erzeugt, nachdem das ind den Speichern FIFO jeweils an erster Stelle stehende Ergebnis des Vergleichers C in die Zwischenspeicher FF3 (FF31...FF316) übertragen wurde. Das Signal Ai wird in der Entscheiderschaltung CA einem Eingang aller ODER-Gatter OCA1 bis OCA 16 zugeführt und außerdem dem Takteingang des ersten D-Flip-Flops DFF1. Das an einem Ausgang der Entscheiderschaltung CA auftretende vom Ausgang des ODER-Gatters OCA 16 abgegebene Ausgangssignal ist unter Zwischenschaltung eines Inverters IN an einen weiteren Eingang der Entscheiderschaltung CA als Serienschaltsignal Ae zurückgeführt und liegt an den zweiten Eingängen der UND-Gatter U1...U16 an. Es ist außerdem weiteren Entscheiderschaltungen im Vermittlungssystem zuführbar.

Im folgenden soll die Funktionsweise der vorstehend beschriebenen Entscheidungslogik näher erläutert werden.

Es wird davon ausgegangen, daß gerade ein Zyklus abgearbeitet ist und an den Eingängen der Entscheiderschaltung die neue Eingangsinformation aus den Zwischenspeichern FF31...FF316 anliegt. Das Serienschaltsignal Ai weist den logischen Kennzustand "LOW" auf und alle D-Flip-Flops DFF1...DFF16 haben diesen logischen Kennzustand "LOW" gespeichert. Damit liegt an jedem zweiten Eingang der UND-Gatter UCA1...UCA16 ein Serienschaltsignal Ae mit dem logischen Kennzustand "HIGH" an und die UND-Gatter sind durchgeschaltet, wenn die zugehörigen Zähler den Ausgangszustand größer Null aufweisen.

Tritt nun eine positive Flanke im Serienschaltsignal Ai auf, so durchläuft dieses Signal mit einer durch die Laufzeit in der ODER-Schaltung OCA16 verursachten Gatter-Verzögerung die Entscheiderschaltung CA und die Eingangsdaten werden in die D-Flip-Flops DFF1...DFF16 übernommen, so daß jedes Flip-Flop, dessen zugehöriger Zähler den Ausgangszustand größer als Null aufwies, nun an seinem nichtinvertierenden Ausgang den Kennzustand "HIGH" hat. Nach der Verzögerung durch den Inverter IN geht das Serienschaltsignal Ae in den logischen Kennzustand "LOW" und alle UND-Gatter UCA1 bis UCA16 sind "disabled". Nach einer Zeit, die ausreicht, um ein D-Flip-Flop zu takten, geht das Serienschaltsignal Ai in den logischen Kennzustand "LOW" über. Diese negative Flanke läuft durch die Kette der Oder-Gatter bis zu dem ersten D-Flip-Flop, das den "HIGH"-Zustand gespeichert hat. Sie bewirkt, daß das Ausgangssignal am invertierenden Ausgang des D-Flip-Flop über das zugehörige NOR-Gatter zum jeweiligen Ausgang ACA durchgeschaltet wird. Dieses Ausgangssignal bei ACA veranlaßt über das zweite Flip-Flop FF2 in der in Fig. 2 gezeigten Schaltung das Auslesen der im zugehörigen Pufferspeicher B gespeicherten Daten an die Abnehmerleitung A. Das betreffende D-Flip-Flop sperrt gleichzeitig mit dem an seinem nichtinvertierenden Ausgang anstehenden Kennzustand "HIGH" die in der Serienschaltung folgenden D-Flip-Flops, da der Zustand "HIGH" nach dem Oder-Gatter erhalten bleibt. Nach dem Auslesen der Daten aus dem aktivierten Pufferspeicher wird in der Taktschaltung eine neue positive Flanke des Serienschaltsignals Ai erzeugt. Dadurch wird das D-Flip-Flop, das eben noch den Kennzustand "HIGH" aufwies, zurückgesetzt und nimmt den logischen Kennzustand "LOW" an. Wenn nun das Serienschaltsignal Ai erneut den logischen Kennzustand "LOW" annimmt, kann der nächste Pufferspeicher ausgelesen werden, dessen zugehöriges D-Flip-Flop den logischen Kennzustand "HIGH" gespeichert hat. Der so beschriebene Zyklus läuft solange ab, bis das letzte D-Flip-Flop der Serienschaltung zurückgesetzt worden ist, das den logischen Kennzustand "HIGH" aufwies. Mit der nächsten positiven Flanke des Serienschaltsignals Ai können dann erneut Eingangsdaten in die D-Flip-Flops DFF1...DFF16 übernommen werden. Diese Flanke fällt in das feste Raster der positiven Flanken des Serienschaltsignals Ai.

## Patentansprüche

1. Koppelfeld für ein Vermittlungssystem, das nach Art eines Raummultiplex-Koppelfeldes mit m/1-Stufen mit m Zubringerleitungen (Z1...Zm) und je einer Abnehmerleitung (A) aufgebaut ist und bei dem Zellen nach einem Zeitvielfachverfahren übertragen werden und anhand der im Zellenkopf enthaltenen Weglenkungsinformation die Durchschaltung der Zellen erfolgt und bei dem bei Übereinstimmung von Weglenkungsinformation und Adresse der Abnehmerleitung (A) die auf der der Zubringerleitung eingetroffene Zelle in den dieser Abnehmerleitung zugeordneten Pufferspeicher (B) eingelesen wird und in jeder m/1-Stufe eine Entscheiderschaltung (CA) vorgesehen ist,
dadurch gekennzeichnet,
daß jeder m/1-Stufe jeder Zubringerleitung (Z1...Zm) ein Speicher (FIFO) zugeordnet ist, dem die Ergebnisse der Vergleiche zwischen Weglenkungsinformation und Adresse der Abnehmerleitung (A) zugeführt werden und daß die Inhalte der Speicher (FIFO) den Entscheiderschaltungen (CA) zuführbar sind, welche anhand dieser Inhalte die Reihenfolge festlegen, in der die in den Pufferspeichern (B) gespeicherten Zellen ausgelesen werden.

2. Koppelfeld nach Anspruch 1,
dadurch gekennzeichnet,
daß die Ergebnisse der Vergleiche zwischen Weglenkungsinformation und Adresse der Abnehmerleitung in jeder m/1-Stufe über eine allen Zubringerleitungen (Z1...Zm) gemeinsame Vielfach-ODER-Schaltung (OS) an je eine UND-Schaltung (U3) angelegt sind, die ausgangsseitig an den Einschreib-Steuereingang des Zwischenspeichers (FIFO) angeschlossen sind.

3. Koppelfeld nach Anspruch 1,
dadurch gekennzeichnet,
daß jedem Zwischenspeicher (FIFO) ausgangsseitig ein Zwischenspeicher (FF3) zugeordnet ist und die Inhalte der Speicher (FIFO) zyklisch in die Zwischenspeicher (FF3) eingelesen werden und die jeweiligen Kennzustände der Zwischenspeicher (FF3) von der Entscheiderschaltung ausgewertet werden.

4. Koppelfeld nach einem der Ansprüche 2 oder 3,
dadurch gekennzeichnet,
daß in jeder m/1-Stufe zum Vergleich der Adresse der Abnehmerleitung (A) mit der Weglenkungsinformation Vergleicher (C) vorgesehen sind und jeder Vergleicher mit einem ersten Flip-Flop (FF1) verbunden ist, das ausgangsseitig an einem Eingang des Speichers (FIFO) und an einem Eingang eines ersten UND-Gatters (U1) angeschlossen ist, dessen Ausgang an einen Steuereingang des Pufferspeichers (B) geführt ist und wobei das erste Flip-Flop (FF1) ausgangsseitig ferner an einem Eingang der allen Zubringerleitungen (Z1...Zm) einer m/1-Stufe gemeinsamen Vielfach-ODER-Schaltung (OS) angeschlossen ist.

5. Koppelfeld nach Anspruch 4,
dadurch gekennzeichnet,
daß in jeder m/1-Stufe ein weiteres Flip-Flop (FF2) vorgesehen ist, das mit einem Ausgang der Entscheiderschaltung (CA) verbunden ist und das ausgangsseitig über ein weiteres UND-Gatter (U2) an einem weiteren Eingang des Pufferspeichers (B) angeschlossen ist, über den das Auslesen des Pufferspeichers auslösbar ist.

6. Koppelfeld nach einem der Ansprüche 2 bis 5,
dadurch gekennzeichnet,
daß in der Entscheiderschaltung (CA) jedem Zwischenspeicher (FF31...FF316) eine Logikschaltung (LCA) zugeordnet ist, welche abhängig vom Kennzustand an dem mit ihr verbundenen Ausgang des Zwischenspeichers (FF31...FF316) das Auslesen des zugeordneten Pufferspeichers steuert.

7. Koppelfeld nach Anspruch 6,
dadurch gekennzeichnet,
daß jede Logikschaltung (LCA) einer Entscheiderschaltung (CA) ein Flip-Flop (DFF1...DFF16) aufweist, das eingangsseitig über ein UND-Gatter (U11...U16) mit dem zugeordneten Zwischenspeicher (FF31...FF316) und ausgangsseitig einerseits an einer ODER-Schaltung (OCA1...OCA16) und andererseits an einer NOR-Schaltung (NOR1...NOR16) angeschlossen ist.

8. Koppelfeld nach Anspruch 7,
dadurch gekennzeichnet,
daß jeweils einem Eingang der ODER-Schaltungen (OCA1...OCA16)) und jeweils einem Eingang der NOR-Schaltungen (NOR1) einer Entscheiderschaltung (CA) ein erstes in der Vermittlungseinrichtung erzeugtes Serienschaltsignal (Ai) zugeführt ist und daß die ODER-Schaltungen (OCA1...OCA15) ausgangsseitig jeweils mit einem Eingang der jeweils nachfolgenden ODER-Schaltung (OCA2...OCA16) verbunden sind, wobei die letzte ODER-Schaltung (OCA16) ein zweites Serienschaltsignal (Ae) abgibt, welches den zweiten Eingängen der UND-Schaltungen (U1...U16) zugeführt ist sowie den UND-Schaltungen (U4) der m/1-Stufen zugeführt ist, deren Ausgänge mit dem Auslese-Steuereingängen der Speicher (FIFO) verbunden sind.

## Claims

1. Switching network for a communication system, which is structured like a space-division multiplex switching network comprising m/1 stages which include auxiliary lines (Z1, ..., Zm) and each have a trunk line (A) and in which cells are transmitted in accordance with a time-division multiple access method and the cells are switched through on the basis of the routing information contained in the cell header and in which the cell arriving at the auxiliary line is written in the buffer (B) dedicated to the trunk line (A) if the routing information and address of this trunk line match and in which each m/1 stage includes a decision circuit (CA), characterized in that each m/1 stage of each auxiliary line (Z1 ... Zm) is assigned a memory (FIFO) to which are applied the results of the comparisons of the routing information and address of the trunk line (A) and in that the contents of the memory (FIFO) can be applied to the decision circuits (CA) which, on the basis of these contents, determine the order in which the cells stored in the buffers (B) are read out.

2. Switching network as claimed in Claim 1, characterized in that the results of the comparisons between routing information and address of the trunk line in each m/1 stage are applied to an AND circuit (U3) through a multiple-OR circuit (OS) common to all auxiliary lines (Z1 ... Zm), the outputs of this AND circuit being connected to the write-control input of the buffer (FIFO).

3. Switching network as claimed in Claim 1, characterized in that a buffer (FF3) is connected to the output of the buffer (FIFO) and in that the contents of the memories (FIFO) are cyclically read in the buffers (FF3) and the states of the buffers (FF3) are evaluated by the decision circuit.

4. Switching network as claimed in one of the Claims 2 or 3, characterized in that in each m/1 stage comparators (C) are arranged to compare the address of the trunk line (A) to the routing information and each comparator is connected to a first flip-flop (FF1) whose output is connected to an input of the memory (FIFO) and an input of a first AND gate (U1), whose output is connected to a control input of the buffer (B) and in which an output of the first flip-flop (FF1) is further connected to an input of the multiple-OR circuit (OS) common to all the auxiliary lines (Z1 ... Zm) of an m/1 stage.

5. Switching network as claimed in Claim 4, characterized in that in each m/1 stage a further flip-flop (FF2) is included whose output is connected to the decision circuit (CA) and whose output is connected to a further input of the buffer (B) via a further AND gate (U2), through which input the buffer can be read out.

6. Switching network as claimed in one of the Claims 2 to 5, characterized in that in the decision circuit (CA) a logic circuit (LCA) is assigned to each buffer (FF31 ... FF316), which circuit (CA) controls the reading of the associated buffer in dependence on the logic state of the output of the buffer (FF31 ... FF316) connected thereto.

7. Switching network as claimed in Claim 6, characterized in that each logic circuit (LCA) of a decision circuit (CA) comprises a flip-flop (DFF1 ... DFF16), whose input is connected to the associated buffer (FF31 ... FF316) via an AND gate (U11 ... U16) and whose output is connected to an OR gate (OCA1 ... OCA16) and also to a NOR gate (NOR1 ... NOR16).

8. Switching network as claimed in Claim 7, characterized in that a first series switching signal (Ai) generated in the switch is applied to an input of the OR gates (OCA1 ... OCA16) and an input of the NOR gate (NOR1), and in that the output of each OR gate (OCA1 ... OCA15) is connected to the input of each subsequent OR gate (OCA2 ... OCA16), while the last OR gate (OCA16) produces a second series switching signal (Ae) which is applied to the second inputs of the AND gates (U1 ... U16) and also to the AND gates (U4) of the m/1 stages whose outputs are connected to the read control inputs of the memories (FIFO).

## Revendications

1. Réseau de connexion pour un système de commutation, qui est conçu comme un réseau de connexion à multiplexage spatial avec des étages m/1 comportant m lignes réseau (Z1...Zm) et chaque fois une ligne d'abonné (A) et dans lequel des cellules sont transmises selon un procédé de multiplexage temporel et l'interconnexion des cellules se fait sur la base des informations directionnelles contenues dans l'en-tête de la cellule, et dans lequel, lorsqu'il y a coïncidence des informations directionnelles et de l'adresse de la ligne d'abonné (A), la cellule arrivée sur la ligne réseau est mémorisée dans la mémoire tampon affectée à cette ligne d'abonné (A) et un circuit de décision (CA) est prévu dans chaque étage m/1, caractérisé en ce que chaque étage m/1 de chaque ligne réseau (Z1...Zm) se voit affecté d'une mémoire (FIFO) à laquelle les résultats des comparaisons entre les informations directionnelles et l'adresse de la ligne d'abonné (A) sont acheminées et en ce que les contenus des mémoires (FIFO) peuvent être acheminés aux circuits de décision (CA), qui établissent, sur la base de ces contenus, l'odre de succession dans lequel les cellules mémorisées dans les mémoires tampons (B) sont extraites.

2. Réseau de connexion selon la revendication 1, caractérisé en ce que les résultats des comparaisons entre les informations directionnelles et l'adresse de la ligne d'abonné de chaque étage m/1 sont appliqués, via un circuit OU multiple (OS) commun à toutes les lignes réseau (Z1...Zm), chaque fois à un circuit ET (U3), ces circuits étant raccordés à l'entrée de commande de mémorisation de la mémoire tampon (FIFO) côté sortie.

3. Réseau de connexion selon la revendication 1, caractérisé en ce qu'à chaque mémoire intermédiaire (FIFO), côté sortie, est affectée une mémoire intermédiaire (FF3) et les contenus des mémoires (FIFO) sont mémorisés de manière cyclique dans les mémoires intermédiaire (FF3) et les états respectifs des mémoires intermédiaires (FF3) sont évalués par le circuit de décision.

4. Réseau de connexion selon l'une ou l'autre des revendications 2 ou 3, caractérisé en ce que dans chaque étage m/1 des comparateurs (C) sont prévus, à des fins de comparaison de l'adresse de la ligne d'abonné (A) avec les informations directionnelles et chaque comparateur est connecté à une première bascule (FF1), qui est connectée, côté sortie, à une entrée de la mémoire (FIFO) et à une entrée d'une première porte ET (U1), dont la sortie est acheminée à un entrée de commande de la mémoire tampon (B), la première bascule (FF1) étant par ailleurs connectée, côté sortie, à une entrée du circuit OU multiple (OS) commun à toutes les lignes réseau (Z1...Zm) d'un étage m/1.

5. Réseau de connexion selon la revendication 4, caractérisé en ce que dans chaque étage m/1, il est prévu une autre bascule (FF2) qui est connectée à une sortie du circuit de décision (CA) et qui est raccordée, côté sortie, via une autre porte ET (U2), à une autre entrée de la mémoire tampon (B) par l'intermédiaire de laquelle l'extraction de la mémoire tampon peut être déclenchée.

6. Réseau de connexion selon l'une quelconque des revendications 2 à 5, caractérisé en ce que dans le circuit de décision (CA), à chaque mémoire intermédiaire (FF31...FF316) est affecté un circuit logique (LCA), qui commande l'extraction de la mémoire tampon affectée en fonction de l'état à la sortie de la mémoire intermédiaire (FF31...FF316) qui y est raccordée.

7. Réseau de connexion selon la revendication 6, caractérisé en ce que chaque circuit logique (LCA) d'un circuit de décision (CA) comporte une bascule (DFF1...DFF16), qui est raccordée, côté entrée, via une porte ET (U11...U16), à la mémoire intermédiaire associée (FF31...FF316) et, côté sortie, d'une part, à un circuit OU (OCA1...OCA16) et, d'autre part, à un circuit NON-OU (NOR1...NOR16).

8. Réseau de connexion selon la revendication 7, caractérisé en ce que respectivement à une entrée des circuits OU (OCA1...OCA16) et respectivement à une entrée des circuits NON-OU (NOR1) d'un circuit de décision (CA) est acheminé un premier signal de commutation sériel (Ai) produit dans le dispositif de commutation et les circuits OU (OCA1...OCA15), côté sortie, sont raccordés chacun à une entrée du circuit OU (OCA2...OCA16) respectivement suivant le dernier circuit OU (OCA16) délivrant un deuxième signal de commutation sériel (Ae), qui est acheminé aux deuxièmes entrées des circuits ET (U1...U16) ainsi qu'aux circuits ET (U4) des étages m/1, dont les sorties sont connectées aux entrées de commande d'extraction des mémoires (FIFO).
